# FASCICULE DE BREVET EUROPEEN

(11) **EP 3 436 840 B1**
(45) Date de publication et mention de la délivrance du brevet: **19.02.2020**
(21) Numéro de dépôt: 17714797.2
(22) Date de dépôt: 03.04.2017
(51) Int. Cl.: G01S 11/04

(54) **SYSTÈME DE COMMANDE, ENSEMBLE COMPRENANT UN TEL SYSTÈME DE COMMANDE ET PROCÉDÉ DE COMMANDE**
STEUERUNGSSYSTEM, ANORDNUNG MIT SOLCH EINEM STEUERUNGSSYSTEM UND STEUERUNGSVERFAHREN
CONTROL SYSTEM, ASSEMBLY COMPRISING SUCH A CONTROL SYSTEM AND CONTROL METHOD

(30) Priorité: 01.04.2016 FR 1600543
(43) Date de publication de la demande: 06.02.2019
(73) Titulaire: Valeo Comfort and Driving Assistance, 94046 Créteil Cedex (FR)
(72) Inventeur: LECONTE, Eric, 94046 Créteil CEDEX (FR)
(74) Mandataire: Delplanque, Arnaud
(86) Numéro de dépôt international: PCT/EP2017/057892
(87) Numéro de publication internationale: WO 2017/168011

(56) Documents cités:
- WO-A2-2007/128319
- XIN LI ET AL: "Multifrequency-based range estimation of RFID Tags", RFID, 2009 IEEE INTERNATIONAL CONFERENCE ON, IEEE, PISCATAWAY, NJ, USA, 27 avril 2009 (2009-04-27), pages 147-154, XP031573185, ISBN: 978-1-4244-3337-7

## Description

### DOMAINE TECHNIQUE AUQUEL SE RAPPORTE L'INVENTION

La présente invention concerne la commande à distance d'une fonctionnalité d'un véhicule.

Elle concerne plus particulièrement un système de commande, un ensemble comprenant un tel système de commande et un procédé de commande.

### ARRIÈRE-PLAN TECHNOLOGIQUE

On connaît (notamment sous la dénomination PEPS pour *"Passive Entry - Passive Start"*) des systèmes dans lesquels une fonctionnalité d'un véhicule (typiquement le déverrouillage des portes du véhicule) est activée lorsqu'un identifiant est suffisamment approché du véhicule pour échanger des données d'authentification via une liaison radio entre l'identifiant et une unité électronique équipant le véhicule. L'état de la technique antérieure est décrite par example dans WO 2007/128319 A2 (SCANDLIFE ITALIA APS [DK]; HOEGFELDT PALLE [DK]; JEPSEN TORBEN [DK]) 15 novembre 2007.

Ce type de système est toutefois la cible d'attaques dites *"relais"* au cours desquelles deux attaquants, situés respectivement à proximité de l'identifiant et à proximité du véhicule, sont équipés d'appareils permettant l'échange de données entre l'identifiant et le véhicule à plus grande distance, et par conséquent le déverrouillage du véhicule alors que son propriétaire (porteur de l'identifiant) est loin de celui-ci.

### OBJET DE L'INVENTION

Dans ce contexte, la présente invention propose un système de commande d'une fonctionnalité d'un véhicule, comprenant un circuit de réception conçu pour transposer à une fréquence prédéterminée un signal reçu (de fréquence variable), un convertisseur analogique-numérique conçu pour convertir le signal transposé en un signal numérique, un circuit de traitement conçu pour recevoir ledit signal numérique et pour déterminer, sur la base dudit signal numérique, une phase du signal reçu, et un processeur conçu pour obtenir en tant que première valeur de phase la phase déterminée par le circuit de traitement lorsque le signal reçu a une première fréquence et en tant que seconde valeur de phase la phase déterminée par le circuit de traitement lorsque le signal reçu a une seconde fréquence distincte de la première fréquence, et pour commander ladite fonctionnalité seulement si une valeur dépendant de la différence entre la première valeur de phase et la seconde valeur de phase est inférieure à un seuil prédéterminé.

La différence de phase entre signaux de fréquences différentes est en effet directement liée à la distance parcourue par ces signaux ; ainsi, en cas d'attaque relais, cette différence (ou une valeur liée à celle-ci) sera importante et la fonctionnalité ne sera pas commandée.

Les valeurs de phase sont en outre ici obtenues par traitement d'un signal numérique au moyen du circuit de traitement (généralement présent pour effectuer d'autres traitements sur le signal reçu), ce qui évite la nécessité d'implanter un circuit dédié pour la mesure de phase du signal reçu.

Le système de commande peut en outre présenter les caractéristiques optionnelles suivantes :
- le circuit de traitement est conçu pour démoduler le signal numérique et/ou pour extraire des données d'authentification à partir du signal démodulé ;
- le processeur est conçu pour commander ladite fonctionnalité seulement si en outre les données d'authentification sont correctement vérifiées ;
- le processeur est conçu pour vérifier les données d'authentification au moyen d'une clé cryptographique mémorisée par le processeur ;
- les première et seconde fréquences sont situées dans une bande de fréquence ayant une largeur inférieure à 2 MHz, par exemple dans la bande à 434 MHz ;
- la première fréquence est comprise entre 433 MHz et 434 MHz, et/ou la seconde fréquence est comprise entre 434 MHz et 435 MHz.

L'invention propose également un ensemble comprenant un identifiant et un système de commande tel que défini ci-dessus, dans lequel l'identifiant est conçu pour émettre un signal (précisément une onde électromagnétique) ayant la première fréquence, puis un signal (précisément une onde électromagnétique) ayant la seconde fréquence.

L'identifiant peut en outre être conçu pour émettre lesdites données d'authentification.

L'invention propose enfin un procédé de commande d'une fonctionnalité d'un véhicule au moyen d'une unité électronique comprenant un circuit de réception conçu pour transposer à une fréquence prédéterminée un signal reçu, un convertisseur analogique-numérique conçu pour convertir le signal transposé en un signal numérique et un circuit de traitement conçu pour recevoir ledit signal numérique et déterminer une phase du signal reçu sur la base dudit signal numérique, le procédé comprenant les étapes suivantes :
- lorsque le signal reçu a une première valeur de fréquence, obtention de la phase déterminée par le circuit de traitement en tant que première valeur de phase ;
- lorsque le signal reçu a une seconde valeur de fréquence, obtention de la phase déterminée par le circuit de traitement en tant que seconde valeur de phase ;
- commande de ladite fonctionnalité seulement si une valeur dépendant de la différence entre la première valeur de phase et la seconde valeur de phase est inférieure à un seuil prédéterminé.

Ce procédé peut comprendre une ou plusieurs des caractéristiques optionnelles du système de commande présentées ci-dessus.

### DESCRIPTION DÉTAILLÉE D'UN EXEMPLE DE RÉALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 représente schématiquement les éléments principaux d'un système dans lequel peut être mise en œuvre l'invention ;
- la figure 2 représente des circuits embarqués dans un véhicule ; et
- la figure 3 représente un procédé de commande d'une fonctionnalité conforme à l'invention.

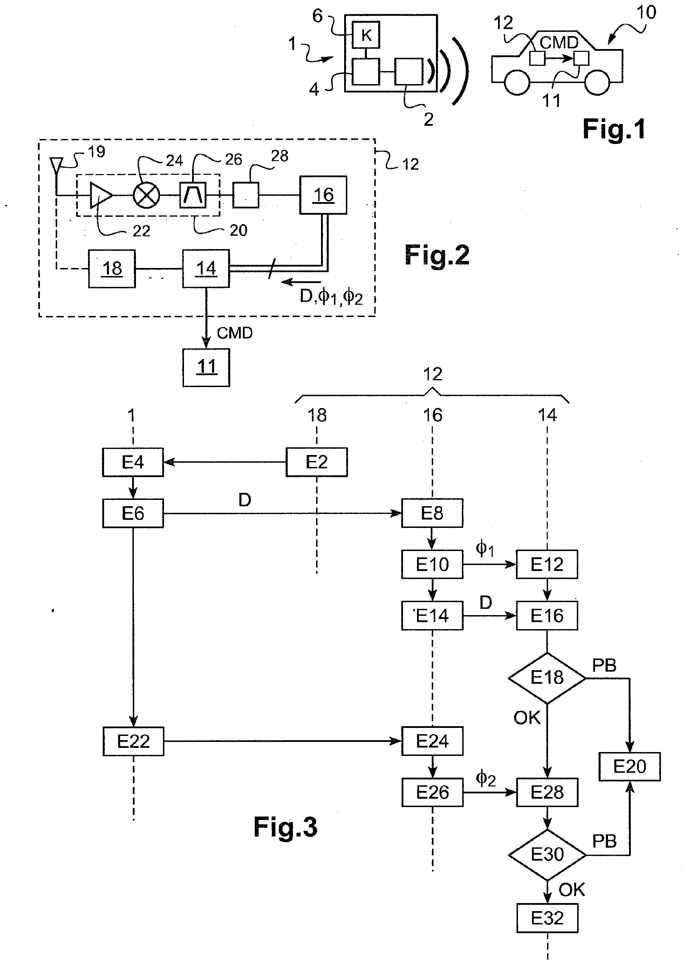

La figure 1 représente schématiquement les éléments principaux d'un système dans lequel peut être mise en œuvre l'invention.

Un tel système comprend un véhicule 10, ici un véhicule automobile, et un identifiant 1, par exemple une clé ou badge d'accès au véhicule 10 (ou, en variante, un terminal utilisateur, tel qu'un téléphone mobile ou un ordiphone - ou *"smartphone"* selon l'application anglaise couramment utilisée, muni de droits d'accès au véhicule 10).

Le véhicule 10 est équipé d'un système de commande 12 et d'un actionneur 11 capable de mettre en œuvre une fonctionnalité du véhicule (par exemple le déverrouillage des portes du véhicule 10) à réception d'une commande CMD dédiée en provenance du système de commande 12.

Le système de commande 12 est par exemple mis en œuvre, au moins en partie, par une unité électronique de commande du véhicule 10.

Le système de commande 12 comprend un processeur 14, un circuit de traitement 16, un module d'émission 18, un circuit de réception 20 et un convertisseur analogique-numérique 28.

Le processeur 14 est par exemple réalisé sous la forme d'un microcontrôleur et comprend ainsi un microprocesseur et au moins une mémoire, par exemple une mémoire non-volatile réinscriptible. La mémoire mémorise notamment des instructions de programme qui permettent, lorsqu'elles sont exécutées par le microprocesseur, la mise en œuvre par le processeur 12 des procédés décrits ci-dessous. La mémoire mémorise également des valeurs ou paramètres utilisés au cours de ces procédés, par exemple des valeurs de phase Φ₁, Φ₂ reçues du circuit de traitement 16 (comme expliqué plus loin).

La mémoire du processeur 14 mémorise en outre une clé cryptographique K (qui a par exemple été inscrite au sein du processeur 14 lors de sa fabrication).

En variante, le processeur 14 pourrait être réalisée sous la forme d'un circuit intégré à application spécifique (ou ASIC pour *"Application Specific Integrated Circuit"*)*.*

Le circuit de traitement 16 est ici un processeur de traitement numérique (ou DSP pour *"Digital Signal Processot"*) conçu notamment pour recevoir un signal numérique modulé sur une porteuse, pour déterminer une phase du signal reçu, pour démoduler le signal reçu et pour extraire des données (en particulier des données d'authentification D) du signal démodulé.

Le processeur 14 et le circuit de traitement 16 sont par exemple reliés par un bus 15 afin d'échanger des données entre eux, notamment les valeurs de phase Φ₁, Φ₂ et les données d'authentification D déjà mentionnées.

Le module d'émission 18 est conçu pour émettre, sous la commande du processeur 14, des signaux destinées à l'identifiant 1. Dans certains modes de réalisation, ces signaux représentent par exemple des données, telles qu'une fréquence souhaitée d'émission d'un signal par l'identifiant 1 et/ou un défi à utiliser dans un processus d'authentification de type défi-réponse (ou *"challenge-response"* selon l'appellation anglo-saxonne), comme expliqué plus loin. Dans d'autres modes de réalisation, ces signaux sont des trames de scrutation.

Le circuit de réception 20 comprend un amplificateur d'entrée 22 relié à une antenne 19, un mélangeur 24 et un filtre passe-bande 26. Le convertisseur analogique-numérique 28 est par ailleurs disposé en sortie du filtre passe-bande 26.

Le mélangeur 24 applique un signal sinusoïdal au signal reçu de l'antenne 19 (via l'amplificateur d'entrée 22) de manière à transposer vers une fréquence prédéterminée (généralement dénommée fréquence intermédiaire) les signaux reçus dans une bande de fréquence donnée (ici la bande à 434 MHz).

Les signaux transposés sont alors filtrés par le filtre passe-bande 26 (dont la bande passante est située au niveau de la fréquence prédéterminée) de sorte que seuls atteignent le convertisseur analogique-numérique 28 les signaux transposés depuis la bande de fréquence susmentionnée.

Le convertisseur analogique-numérique 28 génère ainsi en sortie un signal numérique (formé d'échantillons) qui est appliqué en entrée du circuit de traitement 16.

L'identifiant 20 est généralement porté par un utilisateur du véhicule 10 et permet la commande de certaines fonctionnalités du véhicule 10 (par exemple, comme déjà mentionné, le déverrouillage des portes du véhicule 10), notamment lorsqu'il est approché du véhicule 10. L'identifiant 20 peut éventuellement comporter en outre des boutons de commande, à l'aide desquels l'utilisateur peut commander certaines au moins des fonctionnalités précitées ou d'autres fonctionnalités du véhicule 10.

L'identifiant 20 comprend un module dé communication 2, un processeur 4 et une mémoire 6, ici une mémoire non-volatile (éventuellement réinscriptible).

La mémoire 6 mémorise notamment des instructions de programme qui permettent, lorsqu'elles sont exécutées par le processeur 4, la mise en œuvre par le processeur 4 des procédés décrits ci-dessous. La mémoire 6 mémorise également des valeurs ou paramètres utilisés au cours de ces procédés.

La mémoire 6 mémorise notamment la clé cryptographique K déjà mentionnée. Dans le cas décrit ici où l'identifiant 1 est un badge (ou clé) d'accès au véhicule 10, la clé cryptographique K a par exemple été inscrite dans la mémoire 6 lors de la fabrication de l'identifiant 1. Dans la variante mentionnée ci-dessus où l'identifiant 1 est un terminal utilisateur, la clé cryptographique K a par exemple été reçue d'un serveur distant et mémorisée lors d'une phase de souscription à un service de commande des fonctionnalités du véhicule au moyen du terminal utilisateur.

En variante, le processeur 4 et la mémoire 6 pourraient être remplacés par un circuit intégré à application spécifique.

Le module de communication 2 est conçu pour permettre à l'identifiant 1 d'échanger des données avec le système de commande 12, en émettant des signaux (en particulier dans la bande de fréquence susmentionnée) qui peuvent être reçus par le circuit de réception 20 via l'antenne 19 et en recevant des signaux émis par le module d'émission 18.

La figure 3 représente un procédé de commande d'une fonctionnalité conforme à l'invention.

Ce procédé débute par l'émission, à l'étape E2, d'une trame de scrutation (ou de *"polling"* selon l'appellation anglo-saxonne parfois utilisée) par le module d'émission 18. Une telle trame de scrutation est par exemple émise périodiquement par le module d'émission 18. Comme déjà indiqué, le module d'émission pourrait émettre en variante un signal représentant des données, par exemple une fréquence à utiliser et/ou un défi.

Lorsque l'identifiant est dans la portée du module d'émission 18 (cette portée valant par exemple entre 5 m et 20 m), le module de communication 2 de l'identifiant 1 reçoit le signal émis par le module d'émission 18 (ici une trame de scrutation, en variante les données susmentionnés) à l'étape E4.

Le processeur 4 commande alors à l'étape E6 l'émission, par le module de communication 2, d'un signal ayant une première fréquence f₁ et représentant des données d'authentification D.

Dans les modes de réalisation (comme celui décrit ici) où le signal reçu à l'étape E4 n'est pas à proprement parler représentatif de données, par exemple lorsque ce signal est une trame de scrutation, la première fréquence f₁ est par exemple une fréquence prédéterminée (systématiquement utilisée à réception d'une trame de scrutation) et les données d'authentification D peuvent être produites sur la base de données mémorisées dans la mémoire 6 de l'identifiant 1. Les données d'authentification D sont par exemple produites par combinaison, au moyen d'une fonction cryptographique, de la clé cryptographique K et/ou d'une donnée d'identification de l'identifiant 1 et/ou d'un compteur mémorisé en parallèle dans l'identifiant 1 et dans le système de commande 12.

Dans les modes de réalisation où le signal reçu à l'étape E4 représente des données, notamment une fréquence à utiliser et un défi, la première fréquence f₁ est par exemple la fréquence reçue en tant que donnée à l'étape E4 et les données d'authentification D peuvent être produites notamment sur la base du défi reçu à l'étape E4, par exemple par application au défi reçu d'une fonction cryptographique utilisant la clé cryptographique K.

Le signal ayant la première fréquence f₁ et représentant les données d'authentification D est reçu par le circuit de traitement 16 (via le circuit de réception 20 et le convertisseur analogique-numérique 28) à l'étape E8.

Le circuit de traitement 16 peut ainsi déterminer à l'étape E10 (par traitement numérique) la phase Φ₁ du signal reçu ayant la première fréquence f₁.

Le processeur 14 peut ainsi obtenir à l'étape E12 la phase Φ₁ déterminée à l'étape E10. Dans l'exemple décrit ici, le processeur 14 obtient la phase Φ₁ par lecture, au sein du circuit de traitement 16, d'un registre indicatif de la phase du signal reçu. (On remarque que, selon les modes de réalisation, le processeur 12 connaît la fréquence du signal reçu soit par convention, soit du fait qu'il a commandé à l'étape E2 l'émission d'un signal indiquant la fréquence à utiliser.)

Le circuit de traitement 16 détermine par ailleurs à l'étape E14 les données d'authentification D contenues dans le signal reçu à l'étape E8.

Le processeur 14 peut ainsi obtenir également ces données d'authentification (étape E16).

Le processeur 14 peut ainsi vérifier à l'étape E18 les données d'authentification D, par exemple en utilisant notamment la clé cryptographique K mémorisée dans la mémoire du processeur 14 comme déjà indiqué. Dans le cas où les données d'authentification D ont été déterminées en utilisant un compteur mémorisé en parallèle dans l'identifiant 1 et dans le système de commande 12, le processeur 14 utilise en outre ce compteur à l'étape de vérification E18. Dans le cas où les données d'authentification D ont été déterminées en utilisant un défi transmis à l'étape E2 comme proposé en variante ci-dessus, le processeur 14 utilise en outre ce défi à l'étape de vérification E18.

Si les données d'authentification D ne sont pas correctement vérifiées à l'étape E18 (flèche PB), il est mis fin à l'étape E20 au procédé sans effectuer la fonctionnalité prévue.

Si les données d'authentification D sont correctement vérifiées à l'étape E18 (flèche OK), le processeur 14 obtient en provenance du circuit de traitement 16 une autre valeur de phase Φ₂ comme décrit à présent.

En effet, lors d'une étape E22, le processeur 4 commande l'émission, par le module de communication 2, d'un signal ayant une seconde fréquence f₂ (et représentant éventuellement des données d'authentification D).

Dans certains modes de réalisation (et notamment lorsque le signal reçu à l'étape E4 correspond à des trames de scrutation), le processeur 4 commande cette émission (étape E22) à un instant postérieur d'une durée prédéterminée par rapport à l'étape d'émission E6 susmentionnée, avec une seconde fréquence f₂ prédéterminée.

Dans d'autres modes de réalisation, le processeur 14 peut commander l'émission (étape non représentée) par le module d'émission 18 de données représentatives de la seconde fréquence f2 de sorte que le module de communication 2 utilise cette seconde fréquence f2 en réponse, lors de l'étape E22.

Le signal ayant la seconde fréquence f₂ (et représentant éventuellement les données d'authentification D) est reçu par le circuit de traitement 16 (via le circuit de réception 20 et le convertisseur analogique-numérique 28) à l'étape E24.

Le circuit de traitement 16 peut ainsi déterminer à l'étape E26 (par traitement numérique) la phase Φ₂ du signal reçu ayant la seconde fréquence f₂.

Comme déjà évoqué plus haut, le processeur 14 peut ainsi obtenir à l'étape E28 la phase Φ₂ déterminée à l'étape E26. Comme indiqué pour la phase Φ₁ du signal de fréquence f₁, dans l'exemple décrit ici, le processeur 14 obtient la phase Φ₂ par lecture, au sein du circuit de traitement 16, d'un registre indicatif de la phase du signal reçu.

Le processeur 14 peut ainsi vérifier à l'étape E30 si le système ne fait pas l'objet d'une attaque relais, en vérifiant si une valeur dépendant de la différence entre la phase Φ₁ et la phase Φ₂ est inférieure à un seuil prédéterminé.

En effet, lors d'une attaque relais, les signaux ont été transmis sur une distance plus importante que la portée du système (généralement entre 5 m et 20 m), et la différence entre les phases Φ₁, Φ₂ de signaux de fréquences différentes f₁, f₂ devient importante.

Lorsque le signal de fréquence f₁ (émis à l'étape E6) et le signal de fréquence f₂ (émis à l'étape E22) ont une phase identique à l'émission par le module de communication 2, la différence entre la phase Φ₁ et la phase Φ₂ est représentative de la distance entre l'identifiant 1 et le système de commande 12 et on peut donc directement comparer cette différence au seuil prédéterminé susmentionné.

Dans ce même cas, on peut en variante évaluer la distance d entre l'identifiant 1 et le système de commande 12 comme suit :
d = c.(Φ₁-Φ₂)/[2.π.(f₁-f₂)], où c est la célérité de la lumière, et vérifier à l'étape E3Ô si cette distance d est inférieure à un seuil prédéterminé.

Lorsque le signal de fréquence f₁ (émis à l'étape E6) et le signal de fréquence f₂ (émis à l'étape E22) n'ont pas une phase identique à l'émission, on prend en compte un facteur correctif dans la détermination de la valeur à comparer au seuil prédéterminé (cette valeur dépendant toutefois là encore de la différence entre la phase Φ₁ et la phase Φ₂). Ce facteur correctif dépend ici de la différence de phase à l'émission entre le signal de fréquence f₁ et le signal de fréquence f₂ et peut être transmis de l'identifiant 1 au système de commande 12 (par exemple en tant que donnée contenue dans le signal émis à l'étape E22).

Si le processeur 14 ne vérifie pas à l'étape E30 que la valeur dépendant de la différence entre la phase Φ₁ et la phase Φ₂ est inférieure au seuil prédéterminé (flèche PB), il est mis fin au procédé sans mise en œuvre de la fonctionnalité prévue (étape E20).

Si le processeur 14 vérifie à l'étape E30 que la valeur dépendant de la différence entre la phase Φ₁ et la phase Φ₂ est inférieure au seuil prédéterminé (flèche OK), le processeur 14 émet à l'étape E32 une commande CMD de mise en œuvre de la fonctionnalité (ici le déverrouillage des portes du véhicule 10) à destination de l'actionneur 11.

## Revendications

1. Système de commande (12) d'une fonctionnalité d'un véhicule (10), comprenant :
- un circuit de réception (20) conçu pour transposer à une fréquence prédéterminée un signal reçu ;
- un convertisseur analogique-numérique (28) conçu pour convertir le signal transposé en un signal numérique ;
- un circuit de traitement (16) conçu pour recevoir ledit signal numérique et pour déterminer, sur la base dudit signal numérique, une phase du signal reçu;
- un processeur (14) conçu pour obtenir en tant que première valeur de phase (Φ₁) la phase déterminée par le circuit de traitement (16) lorsque le signal reçu a une première fréquence et en tant que seconde valeur de phase (Φ₂) la phase déterminée par le circuit de traitement (16) lorsque le signal reçu a une seconde fréquence distincte de la première fréquence, et pour commander ladite fonctionnalité seulement si une valeur dépendant de la différence entre la première valeur de phase (Φ₁) et la seconde valeur de phase (Φ₂) est inférieure à un seuil prédéterminé.

2. Système de commande selon la revendication 1, dans lequel le circuit de traitement (16) est conçu pour démoduler le signal numérique et pour extraire des données d'authentification (D)'à partir du signal démodulé.

3. Système de commande selon la revendication 2, dans lequel le processeur (14) est conçu pour commander ladite fonctionnalité seulement si en outre les données d'authentification (D) sont correctement vérifiées.

4. Système de commande selon la revendication 2 ou 3, dans lequel le processeur (14) est conçu pour vérifier les données d'authentification (D) au moyen d'une clé cryptographique mémorisée par le processeur (14).

5. Système de commande selon l'une des revendications 1 à 4, dans lequel les première et seconde fréquences sont situées dans une bande de fréquence ayant une largeur inférieure à 2 MHz.

6. Système de commande selon l'une des revendications 1 à 5, dans lequel les première et seconde fréquences sont situées dans la bande à 434 MHz.

7. Système de commande selon l'une des revendications 1 à 6, dans lequel la première fréquence est comprise entre 433 MHz et 434 MHz et la seconde fréquence est comprise entre 434 MHz et 435 MHz.

8. Ensemble comprenant un identifiant (1) et un système de commande (12) selon l'une des revendications 1 à 7, dans lequel l'identifiant (1) est conçu pour émettre un signal ayant la première fréquence, puis un signal ayant la seconde fréquence.

9. Ensemble selon la revendication 8, le système de commande (12) étant conforme à la revendication 2, dans lequel l'identifiant (1) est conçu pour émettre lesdites données d'authentification (D).

10. Procédé de commande d'une fonctionnalité d'un véhicule (10) au moyen d'une unité électronique (12) comprenant un circuit de réception (20) conçu pour transposer à une fréquence prédéterminée un signal reçu, un convertisseur analogique-numérique (28) conçu pour convertir le signal transposé en un signal numérique et un circuit de traitement (16) conçu pour recevoir ledit signal numérique et pour déterminer, sur la base dudit signal numérique, une phase du signal reçu, le procédé comprenant les étapes suivantes :
- lorsque le signal reçu a une première valeur de fréquence, obtention de la phase déterminée par le circuit de traitement en tant que première valeur de phase (Φ₁) ;
- lorsque le signal reçu a une seconde valeur de fréquence, obtention de la phase déterminée par le circuit de traitement en tant que seconde valeur de phase (Φ₂) ;
- commande de ladite fonctionnalité seulement si une valeur dépendant de la différence entre la première valeur de phase (Φ₁) et la seconde valeur de phase (Φ₂) est inférieure à un seuil prédéterminé.

## Patentansprüche

1. Steuersystem (12) einer Funktion eines Fahrzeugs (10), das enthält:
- einen Empfangskreis (20), der ausgebildet ist, um ein empfangenes Signal in eine vorbestimmte Frequenz umzusetzen;
- einen Analog-Digital-Wandler (28), der ausgebildet ist, um das umgesetzte Signal in ein digitales Signal umzuwandeln;
- einen Verarbeitungskreis (16), der ausgebildet ist, um das digitale Signal zu empfangen und um auf der Basis des digitalen Signals eine Phase des empfangenen Signals zu bestimmen;
- einen Prozessor (14), der ausgebildet ist, um als ersten Phasenwert (Φ₁) die vom Verarbeitungskreis (16) bestimmte Phase zu erhalten, wenn das empfangene Signal eine erste Frequenz hat, und als zweiten Phasenwert (Φ₂) die vom Verarbeitungskreis (16) bestimmte Phase zu erhalten, wenn das empfangene Signal eine zweite Frequenz anders als die erste Frequenz hat, und um die Funktion nur zu steuern, wenn ein von der Differenz zwischen dem ersten Phasenwert (Φ₁) und dem zweiten Phasenwert (Φ₂) abhängender Wert niedriger als eine vorbestimmte Schwelle ist.

2. Steuersystem nach Anspruch 1, wobei der Verarbeitungskreis (16) ausgebildet ist, um das digitale Signal zu demodulieren und um ausgehend vom demodulierten Signal Authentifizierungsdaten (D) zu entnehmen.

3. Steuersystem nach Anspruch 2, wobei der Prozessor (14) ausgebildet ist, um die Funktion nur zu steuern, wenn außerdem die Authentifizierungsdaten (D) korrekt verifiziert werden.

4. Steuersystem nach Anspruch 2 oder 3, wobei der Prozessor (14) ausgebildet ist, um die Authentifizierungsdaten (D) mittels eines vom Prozessor (14) gespeicherten kryptographischen Schlüssels zu verifizieren.

5. Steuersystem nach einem der Ansprüche 1 bis 4, wobei die erste und zweite Frequenz sich in einem Frequenzband befinden, das eine Breite von weniger als 2 MHz hat.

6. Steuersystem nach einem der Ansprüche 1 bis 5, wobei die erste und zweite Frequenz sich im Band von 434 MHz befinden.

7. Steuersystem nach einem der Ansprüche 1 bis 6, wobei die erste Frequenz zwischen 433 MHz und 434 MHz und die zweite Frequenz zwischen 434 MHz und 435 MHz liegt.

8. Einheit, die eine Benutzeridentifizierung (1) und ein Steuersystem (12) nach einem der Ansprüche 1 bis 7 enthält, wobei die Benutzeridentifizierung (1) ausgebildet ist, um ein Signal mit der ersten Frequenz und dann ein Signal mit der zweiten Frequenz zu senden.

9. Einheit nach Anspruch 8, wobei das Steuersystem (12) gemäß Anspruch 2 ist, wobei die Benutzeridentifizierung (1) ausgebildet ist, um die Authentifizierungsdaten (D) zu senden.

10. Verfahren zum Steuern einer Funktion eines Fahrzeugs (10) mittels einer Elektronikeinheit (12), die einen Empfangskreis (20), der ausgebildet ist, um ein empfangenes Signal in eine vorbestimmte Frequenz umzusetzen, einen Analog-Digital-Wandler (28), der ausgebildet ist, um das umgesetzte Signal in ein digitales Signal umzuwandeln, und einen Verarbeitungskreis (16) enthält, der ausgebildet ist, um das digitale Signal zu empfangen und um auf der Basis des digitalen Signals eine Phase des empfangenen Signals zu bestimmen, wobei das Verfahren die folgenden Schritte enthält:
- wenn das empfangene Signal einen ersten Frequenzwert hat, Erhalt der vom Verarbeitungskreis bestimmten Phase als erster Phasenwert (Φ₁);
- wenn das empfangene Signal einen zweiten Frequenzwert hat, Erhalt der vom Verarbeitungskreis bestimmten Phase als zweiter Phasenwert (Φ₂);
- Steuerung der Funktion nur, wenn ein von der Differenz zwischen dem ersten Phasenwert (Φ₁) und dem zweiten Phasenwert (Φ₂) abhängender Wert niedriger als eine vorbestimmte Schwelle ist.

## Claims

1. System (12) for controlling a function of a vehicle (10), comprising:
- a receiving circuit (20) designed to transpose a received signal to a predetermined frequency;
- an analogue-to-digital converter (28) designed to convert the transposed signal into a digital signal;
- a processing circuit (16) designed to receive said digital signal and to determine a phase of the received signal on the basis of said digital signal;
- a processor (14) designed to obtain, as first phase value (Φ₁), the phase determined by the processing circuit (16) when the received signal is at a first frequency and, as second phase value (Φ₂), the phase determined by the processing circuit (16) when the received signal is at a second frequency distinct from the first frequency, and to control said function only if a value dependent on the difference between the first phase value (Φ₁) and the second phase value (Φ₂) is below a predetermined threshold.

2. Control system according to Claim 1, wherein the processing circuit (16) is designed to demodulate the digital signal and to extract authentication data (D) from the demodulated signal.

3. Control system according to Claim 2, wherein the processor (14) is designed to control said function only if, in addition, the authentication data (D) are correctly verified.

4. Control system according to Claim 2 or 3, wherein the processor (14) is designed to verify the authentication data (D) using a cryptographic key stored by the processor (14).

5. Control system according to one of Claims 1 to 4, wherein the first and second frequencies lie within a frequency band less than 2 MHz wide.

6. Control system according to one of Claims 1 to 5, wherein the first and second frequencies lie within the band at 434 MHz.

7. Control system according to one of Claims 1 to 6, wherein the first frequency is between 433 MHz and 434 MHz, and the second frequency is between 434 MHz and 435 MHz.

8. Set comprising an identifier (1) and a control system (12) according to one of Claims 1 to 7, wherein the identifier (1) is designed to transmit a signal at the first frequency and then a signal at the second frequency.

9. Set according to Claim 8, the control system (12) being in accordance with Claim 2, wherein the identifier (1) is designed to transmit said authentication data (D).

10. Method for controlling a function of a vehicle (10) by means of an electronic unit (12) comprising a receiving circuit (20) designed to transpose a received signal to a predetermined frequency, an analogue-to-digital converter (28) designed to convert the transposed signal into a digital signal and a processing circuit (16) designed to receive said digital signal and to determine a phase of the received signal on the basis of said digital signal, the method comprising the following steps:
- when the received signal has a first frequency value, obtaining the phase determined by the processing circuit as first phase value (Φ₁);
- when the received signal has a second frequency value, obtaining the phase determined by the processing circuit as second phase value (Φ₂);
- controlling said function only if a value dependent on the difference between the first phase value (Φ₁) and the second phase value (Φ₂) is below a predetermined threshold.
